# EUROPEAN PATENT APPLICATION

(11) **EP 3 822 542 A1**
(43) Date of publication of application: **19.05.2021**
(21) Application number: 20199030.6
(22) Date of filing: 29.09.2020
(51) Int. Cl.: F24C 15/00, A21B 3/13, F24C 15/16, F24C 15/08

(54) **A METHOD FOR MANUFACTURING A COMPONENT OF OR A BLANK SHEET FOR FORMING A COMPONENT OF A HOUSEHOLD APPLIANCE, COMPONENT FOR A HOUSEHOLD APPLIANCE AND HOUSEHOLD APPLIANCE**

(30) Priority: 15.11.2019 EP 19209417; 07.04.2020 WO PCT/CN2020/083446
(71) Applicant: ELECTROLUX APPLIANCES AKTIEBOLAG, 105 45 Stockholm (SE)
(72) Inventor: TISSELLI, Filippo, 47122 Forli (IT)
(74) Representative: Electrolux Group Patents

(57) **Abstract**

The present invention relates to a method for manufacturing a component of a household appliance, in particular a cooking appliance, or a blank sheet from which the component is formed, the component or the blank sheet having a printing on its surface, comprising at least the following steps:
- providing the blank sheet or providing the component, the blank sheet or component having a surface to be coated,
- applying a non-stick and/or non-wetting coating to the surface, the coating having an exposed surface,
- performing an activation process on at least a part of the exposed surface of the coating in order to provide an activated surface area, wherein the activation process in particular increases the surface tension within the activated surface area,
- applying a printing to the activated surface area.

The invention further relates to a component of or for use in a household appliance and a household appliance, in particular a cooking appliance is disclosed.

## Description

The present invention relates to a method for manufacturing a component of or a blank sheet for forming a component of a household appliance, in particular of a cooking appliance. The present invention further relates to a component of a household appliance, in particular obtainable by such a method and a household appliance comprising such a component.

Currently, in the manufacturing process of components and/or household appliances comprising such components, said components, e.g. walls of an oven cavity or top plates of a cooking hob as well as accessories for use in household appliances such as cooking good carriers, e.g. baking trays, also have, besides mechanical functionality, an aesthetic appearance and are treated by their users by touching or have to be cleaned after usage. Therefore, such components are equipped with a self-cleaning and/or an easy-to-clean and/or a hydrophobic characteristic as well as with specific printing for applying product name and/or symbols for a user interface. Different approaches are known for performing components with such characteristic and specific printing.

One approach provides a functional coating which results in said self-cleaning and/or an easy-to-clean and/or a hydrophobic characteristic and which is applied on the surface of the component after forming process and after having applied a specific printing to the component, e.g. by laser technology.

In an alternative solution, the functional coating may be applied to the blank sheet of the component, thus prior to the forming process. This alternative solution allows a significant cost advantage over the first approach, due to simplified logistics in terms of transportation costs and component codes fragmentation. On the other hand, this alternative solution may result in corrosion problems on the component, even in case of using stainless steel material, when the functional coating is removed for applying the printing on the component. Alternatively, in case of not removing the coating, the printing may be non-durable due to lack of adhesion of the printing material due to the hydrophobic behaviour of the coated surface, if considering traditional serigraphy or tampography. Further, the aesthetical appearance may suffer from the printing on the coating and/or the surface may lose its self-cleaning or easy-to-clean effect.

As a third option, symbols or product names may be applied to the component by mechanical embossing or stamping, but this solution is aesthetically not appealing as the other solutions and shows some limitations in symbols design and size.

It is an object of the present invention to provide a method for manufacturing a component of a household appliance as well as a component of a household appliance and a household appliance having such a component which overcomes the above-described disadvantages.

The first object of the invention is achieved by a method for manufacturing a component of a household appliance according to the features of claim 1.

A method for manufacturing a component of or for a household appliance, in particular a cooking appliance, or a blank sheet from which the component is formed, the component or the blank sheet having a printing on its surface, is provided. The method comprises at least the following steps:
A blank sheet from which the component is formed or the component is provided, the blank sheet or component having a surface to be coated. Furthermore, the blank sheet or component have a base structure or base layer, hereinafter also referred to as component body. The surface is in particular an outer surface.

A non-stick and/or non-wetting coating is applied to the surface, the coating having an exposed (or: outer) surface. Said exposed surface may be arranged at the coating opposite to a boundary surface adjacent the base structure or base layer. The coating may in particular have self-cleaning and/or easy-to-clean properties and/or show a hydrophobic characteristic. In other words: A self-cleaning and/or easy-to-clean and/or hydrophobic effect or characteristic is received by means of a self-cleaning coating and/or an easy-to-clean coating and/or a hydrophobic coating which is applied to the surface.

After applying of the coating, an activation process is performed on at least a part of the exposed surface of the coating in order to provide an activated surface area. The activation process in particular increases the surface tension within the activated surface area compared to the remaining exposed surface of the coating before the activation process or parts of the exposed surface that are not activated.

In a further step, a printing or printing materiel, like ink, is applied to the activated surface area, thus on said parts of the exposed surface of the coating for or on which the activation process has been carried out.

In other words: A method for manufacturing a blank sheet for or component of a household appliance, in particular of a cooking appliance, more in particular of a cooking hob, the blank sheet or component having a base structure or base layer and a surface, in particular an outer surface, is provided. The surface receives or has received a self-cleaning and/or an easy-to-clean and/or a hydrophobic characteristic. According to the present invention, at least one printing is applied to the surface. By applying at least one printing or printing material to the surface, a surface with slightly aesthetical appearance and continuous self-cleaning and/or easy-to-clean and/or hydrophobic effect or characteristic is provided.

The expression "non-stick" indicates a surface that resists adherence of food items, such as cheese, sauces, oils, fat or the like, what permits easy cleaning of the component, in particular the top plate or the burner cap. The expression "non-wetting" terms a surface that repels liquids, e.g. water. The property is evidenced by a large contact angle between a drop of water and the surface on which the drop rests, wherein a contact angle of at least 95 degree is desirable.

In case that the coating is applied to the blank sheet before forming the component a faster and more effective application can be achieved.

Furthermore, performing a preliminary activation process on the coating increases locally the surface tension so that the coating shows good adhesion properties in said activated areas for subsequent applying of the printing. Said activation lasts for some hours, allowing a convenient application of symbols or the like, in particular by using traditional ink technologies.

As the printing is applied to the coating without need of removing parts of said coating, e.g. by laser treatment before, corrosion issues are avoided.

A preferred embodiment is characterized by an activation process which is performed using plasma technology. Particularly, a plasma technology gun or pin is used, moving on or above the part of the exposed surface of the coating to be treated and performing the activation process passing over said area. The coating is essentially non polar and shows non-wetting properties. Due to the activation process within the plasma, polar groups are formed at the exposed surface of the coating that increase the wettability of its surface. Subsequently, the printing can adhere to the surface.

In order to perform a quick and cost-efficient treatment, the activation process may be performed by limiting to the area or areas receiving a printing. Hence, areas without any printing may be excluded from such treatment. In order to reach this target, the exposed surface of the coating is covered at least partially, thus blank or non-printed areas are covered before performing the activation process in order to limit the part of the exposed surface on which the activation process is performed, in particular by covering parts of the exposed surface by means of respective cover elements or cover means. Alternatively, the plasma technology gun or pin may be deactivated when passing over the blank or non-printed areas.

In particular, the printing is based on ink application technology, preferably using serigraphy or tampography.

According to a preferred embodiment, the non-stick and/or non-wetting coating is a sol-gel coating, in particular comprising at least a first and a second layer. Such a coating is for example a transparent or pigmented coatings for stainless steel and ceramic coatings for enameled component. Such coating is for example available under the name XERA-DUR or XERADUR 2 (*Industrielack AG, Haemmerli 1, CH-8855 Wangen).* Furthermore, EP 2 177 580 B1 discloses such a coating obtained by a sol-gel process from compositions comprising at least a silica sol and a silane. Besides a good cleaning behaviour, such coatings shows good abrasion-resistant and a great surface hardness what leads to an increased lifetime.

The blank sheet or component can be made of different materials, the material being suitable for intended use. Preferably, the blank sheet or component is a made of a corrosive material, in particular corrosive steel, or made of a non-corrosive material, in particular stainless steel and/or aluminium, or made of glass, in particular a tempered glass, or made of glass ceramics. Corrosive steel is also known as so-called low-carbon steel, typically containing a small percentage of carbon, approximately about 0.05 to 0.30% carbon.

It is a preferred embodiment, in particular with regard to blank sheets or components made of a corrosive material, to apply a protective layer to the surface of the blank sheet or component before applying the coating. This is due to the reason, that the non-stick and/or non-wetting coating itself does not protect the base material or substrate, thus the component, from corrosion. Therefore, an additional corrosion protection layer is advantageous if the component is made of any corrosive material so that the non-stick and/or non-wetting coating can also be used with base material or substrate that is corrosive itself. In case the base material is non-corrosive itself, the step of applying a protective layer may be optional. In particular an enamel layer and/or an aluminium layer and/or a layer comprising aluminium, is applied to the surface. The coating is then applied to an exposed surface of the protective layer.

Preferably the protective layer has a thickness between 50 and 250µm, in particular between 100 and 200µm.

In order to clean the surface and to provide good adhesion properties for the protective layer and/or the coating, the surface of the blank sheet or component is pretreated before applying the protective layer or the coating and/or the exposed surface of the protective layer is pretreated before applying the coating, in each case for providing a surface having a roughness being suitable for applying the protective layer and/or the coating. Said pretreatment is in particular carried out by mechanical treatment, physical treatment or chemical treatment, more preferably by sandblasting and/or laser treatment and/or an enamelling process to form a ground layer.

The ground layer, in particular the enamel layer obtainable by the enamelling process, may have a layer thickness between 5 and 100µm, in particular between 10 and 80pm, more particularly between 20 and 50µm.

It has been found that the adhesion of the non-stick and/or non-wetting coating may particularly depend on the surface roughness so that a roughening of the surface is advantageous for the adhesion properties. Therefore an advantageous surface structure may reduce the risk of peel off of the non-stick and/or non-wetting coating and at the same time allow to reduce the amount of coating and thus decrease costs. However, a surface roughness, which is too high, may also be disadvantageous, as the adhesion of the coating may be not optimal and/or the amount of coating needed will be higher than necessary.

The surface might be roughened and/or protected against corrosion by applying a ground layer by an enamelling process, thus by applying an enamel layer, to the surface. The enamelling process in particular comprises applying an enamel powder onto the upper surface of the component and/or onto the surface of the protective layer, and heating the enamel powder for providing a ground layer with a surface having a roughness being suitable for applying the non-stick and/or non-wetting coating and/or being corrosion resistant.

Such a ground layer is useful for all base materials in order to prepare the component for subsequent coating, thus for providing a good wettability and clean surface to obtain good adhesion performances on the full surface and no detachment of the non-stick and/or non-wetting coating.

Furthermore, said ground layer may provide corrosion resistance for the surface of the component so that it also functions as a protective layer, in case of a component made of a non-corrosive material itself.

The protective layer and/or the ground layer might be made of a so-called pyro or vitreous enamel that essentially consists of melted and fused glass powder. For applying said enamel layer to the component, high burning temperatures from about 820 to 840°C are needed.

Another kind of protective layer and/or the ground layer might be made of an enamel having a low softening point between 450°C and 560°C, respectively a low glass transition temperature, a so-called "low-temperature enamel". The softening point is defined as a temperature, respectively a temperature range, at which the material, e.g. the enamel turns from its hard and relatively brittle state into a molten or rubber-like state when temperature is increased. Therefore, said low-temperature enamel can be applied to the surface of the component at lower burning temperatures. Said enamel is for example an aluminium enamel that comprises aluminium oxide. Compositions of such conventional enamels are known for example from WO 02/02471 A1 or GB 718,132.

Another kind of protective layer and/or the ground layer might be made of a catalytic enamel, for example known from EP 0 565 941 A1, disclosing a catalytically active coating composition comprising an enamel frit, inert substances and an oxidation catalyst, or from GB 1 418 842 disclosing a catalytically active enamel layer for a cooking appliances.

Furthermore, so-called ground coat compositions comprising generally a glassy component and an additive component might be used for forming the protective layer and/or the ground layer that provides the effect of a rough and binding surface. Such ground coats are for example described in US 8,778,455 B2 and comprise a combination of one or more alkali oxides, one or more alkaline earth oxides and one or more various transition metal oxides as glassy component, and additive such as fluorine.

A surface roughness of a surface of the blank sheet or component and/or a surface of the ground layer and/or a surface of the protective layer achieved with such pretreatment step is between Ra 0.01 µm to 10.00 µm, more preferably between Ra 0.10 µm to 5.00 µm, still more preferably between Ra 0.20 µm to 5.00 µm, still more preferably between Ra 0.50 µm to 5.00 µm, still more preferably between Ra 2.00 µm to 5.00 µm, still more preferably between Ra 2.50 µm to 5.00 µm.

Such an advantageous surface structure with a roughness within the above limits may further reduces the risk of peel off of the non-stick and/or non-wetting coating and at the same time allow to reduce the amount of coating and thus decrease costs in a favorite manner. It has found that a roughness within the above limits further improves the adhesion of subsequent layers.

The person skilled in the art knows various standard methods to determine the surface roughness value Ra. Particularly the surface roughness may be preferably determined in accordance with BS EN ISO 4287:2000 British standard, identical with the ISO 4287:1997 standard.

For receiving a component, the blank sheet is formed into the component after applying of the coating. A person skilled in the art will understand that forming may happen after coating application or preferably before coating application. In contrast thereto, the activation is preferably performed after coating application.

The second object of the invention is achieved by a component of a household appliance, in particular obtainable by a method as described above, according to the features of claim 10.

The Component, in particular a wall of a household appliance, in particular a wall of a cooking appliance, and/or a fan cover of a cooking appliance and/or a component of or for a cooking hob, in particular a top plate of a cooking hob and/or a burner cap of a gas burner for a gas hob, and/or an accessory for a household appliance, in particular a cooking good carrier for a cooking appliance, has a component body and a surface. The surface is coated with a non-wetting and/or non-stick coating having an exposed surface, wherein at least a part of the exposed surface of the coating provides an activated surface area. A printing is applied to the activated surface area.

The expression "component" within the meaning of the application covers both, parts of the household appliance itself as well as accessories which can be used in conjunction with a household appliance, e.g. cooking good carriers like baking trays or frying pans or the like.

The component may further comprise a protective layer and/or a ground layer arranged between the component body and the coating.

According to a preferred embodiment, the printing is not touching the component body of the component.

Preferably, the component is a made of a corrosive material, in particular corrosive steel, or made of a non-corrosive material, in particular stainless steel and/or aluminium, or made of glass, in particular a tempered glass, or made of glass ceramics.

Regarding the activation process, printing and the materials used, we herewith explicitly refer to the explanations and examples described with regard to the method according to the invention.

The non-stick and/or non-wetting properties of the coating are not interrupted or disrupted at the area or areas with printing.

The third object of the invention is achieved by a household appliance, in particular a cooking appliance, according to the features of claim 15.

A household appliance, in particular a cooking appliance, more in particular an oven or a cooking hob, is provided which comprises a component having at least a component body and a surface, wherein the surface is coated with a non-wetting and/or non-stick coating having an exposed surface, wherein at least a part of the exposed surface of the coating provides an activated surface area, and wherein a printing is applied to the activated surface area.

Novel and inventive features of the present invention are set forth in the appended claims.

The present invention will be described in further detail with reference to the drawings, in which
- FIG 1: is a sectional view of a small section of a component of a household appliance before receiving any printing;
- FIG 2: illustrates a first solution for applying a printing on the component section of FIG 1 according to the prior art;
- FIG 3: illustrates a second solution for applying a printing on the component section of FIG 1 according to the prior art;
- FIG 4: illustrates an embodiment of the invention for applying a printing on the component section of FIG 1, wherein the surface of the coating is at least partially activated;
- FIG 5: illustrates the embodiment according to FIG 4, wherein the printing is applied to the component section;
- FIG 6: illustrates a further embodiment of the invention.

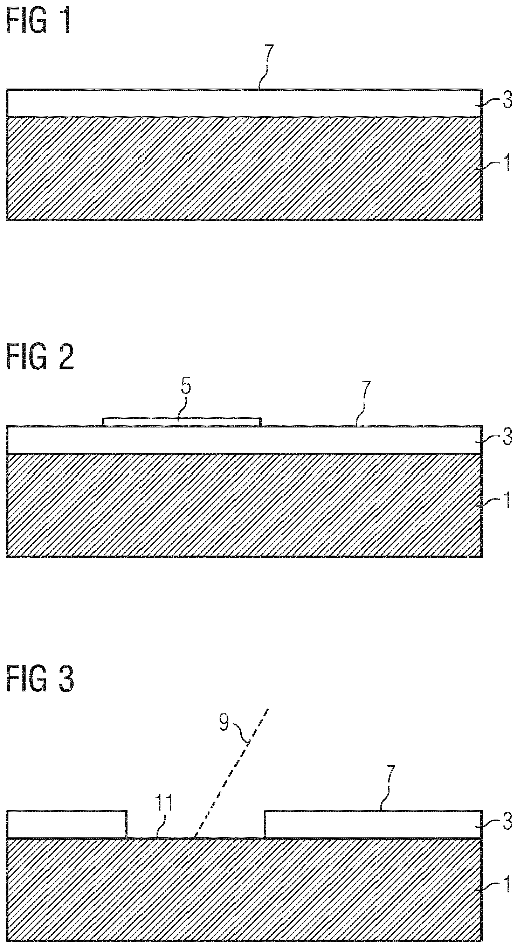

FIG 1 illustrates a sectional view on a small section of a component of a household appliance. By way of example, the small section represent a cutout of a user interface area arranged on a worktop of a cooking hob which may be a conventional electric hob or a gas hob or an area for applying a symbol or product name. The component is made of a metal sheet 1 which is formed out of a flat metal plate material, e. g. a stainless steel plate, by stamping and embossing. Its outer or upper surface, which is facing the user or which is exposed to the user's touching, is covered, at least in the area of a user interface of the household appliance, with a non-stick and/or non-wetting coating 3, which has a self-cleaning and/or an easy-to-clean and/or a hydrophobic characteristic or effect in order to meet the user's desire for a low-maintenance appliance. Exemplary, the coating 3 is a sol-gel coating.

Mainly for the purpose of applying a product name on the household appliance and/or symbols on a user interface thereof, a printing 5 is arranged on the component. The printing is realized with a traditional ink application technology, in particular by means of serigraphy or tampography.

The printing 5 may be applied on the exposed surface 7 of the coating 3 as illustrated with FIG 2. Such solution, however, is unfavourable with respect to a durability of the printing since the printing 5 is lacking adhesion of the ink due to the hydrophobic behaviour of the coated surface 7 when using traditional serigraphy or tampography.

In order to overcome the afore-described lack of adhesion, an alternative solution is illustrated with FIG 3. This alternative solution is characterized by a removal of the coating 3 in the area of printing 5. The coating removing process is usually executed by means of laser technology. A laser beam 9 cuts out the area where the printing 5 shall be placed prior to the application of ink for performing the printing process. The coating 3 is removed completely down to the upper or outer surface 11 of the component or blank metal sheet 1. The outer surface 11 is suitable for enabling a durable printing thereon. This solution, however, is more expensive than the solution according to FIG 2. Moreover, due to the laser-supported removal of the coating 3, corrosion may occur later on due to lack of a corrosion protection effect by the coating 3.

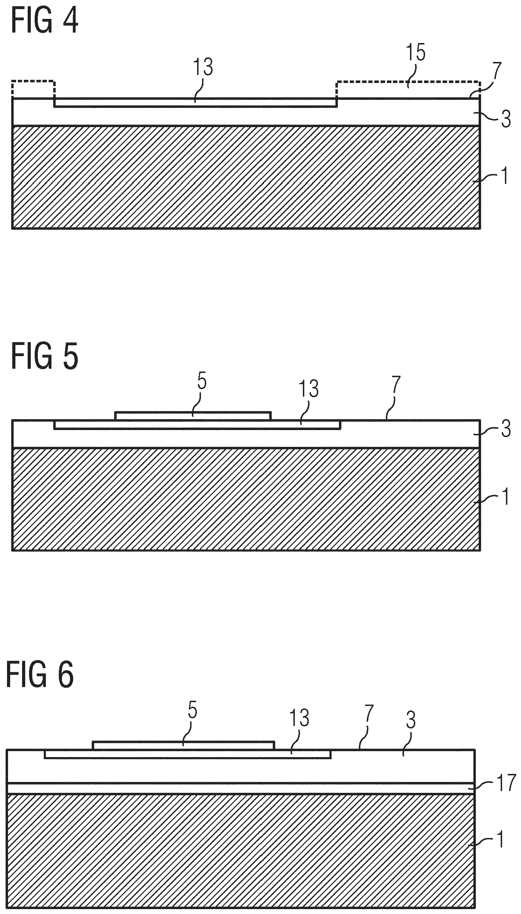

The problems occurring with the solutions according to FIGs 2 and 3 are solved with a two-step printing process shown in FIG 3 and 4.

The manufacturing of a component of a household appliance, in particular a cooking appliance, or a blank sheet from which the component is formed, e. g. of a top plate of a cooking hob, is exemplary started with a blank metal sheet 1, in particular a stainless steel plate, on which a non-stick and/or non-wetting coating 3 is applied. This allows a faster and more effective application. A user interface application is performed in a second step, after forming the blank metal sheet 1. The user interface application is realized with a well-known ink application process based on serigraphy or tampography, however, according to the invention, by means of a two-step application process.

A first step thereof is illustrated with FIG 4. In order to cause the ink to adhere to the coated surface, a preliminary activation process is performed on at least a part of the exposed surface of the coating in order to provide an activated surface area 13 or user interface area using a plasma technology pin or gun which moves on the selected area 13 to be treated. The process increases locally the surface tension and the activation lasts for some days, allowing a convenient application of symbols, marking or lettering with traditional ink technologies.

In order to limit the part of the exposed surface 7 of the coating 3 to said area on which the activation process shall be performed, the exposed surface 7 of the coating 3 is covered partially before and during performing the activation process, for example by a cover element 15 as indicated by the dashed lines in FIG 4.

Said ink application step, the second printing step, is shown with FIG 5. According to a printing pattern, ink 5 is applied on the destined area. As illustrated, the respective surface, i. e. the activated surface area 13, is prepared for a durable reception of the printing ink 5, which preparation has been performed with the first step, as described above. The preparation results in the provision of the activated surface area 13 which may protrude the area for the printing 5, as can be seen in FIG 5. The printing 5 is not touching the component body of the component. Furthermore, the non-stick and/or non-wetting properties of the coating 3 are not interrupted or disrupted at the area or areas with printing 5.

As shown in FIG 6, the component may comprise a protective layer and/or ground layer 17 being applied to the surface of the blank sheet 1 before applying of the coating in order to provide good adhesion properties of the coating 3. The ground layer 17 is presently formed by an enamelling process, thus the ground layer 17 is an enamel layer, and shows a surface roughness Ra of about 2 to 3.5µm at its exposed surface. The thickness of the ground layer 17 is about 20pm. Ground layer 17 also shows corrosion resistant properties so that the component is protected against corrosion, what is in particular useful if said component is made of a corrosive material, for example a low carbon steel to save costs.

Although an illustrative embodiment of the present invention has been described herein with reference to the accompanying drawing, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 1: metal sheet
- 3: coating
- 5: printing / ink
- 7: outer surface of coating
- 9: laser beam
- 11: metal sheet surface
- 13: selected area
- 15: cover element
- 17: ground layer

## Claims

1. A method for manufacturing a component of a household appliance, in particular a cooking appliance, or a blank sheet (1) from which the component is formed, the component or the blank sheet (1) having a printing on its surface, comprising at least the following steps:
- providing the blank sheet (1) or providing the component, the blank sheet (1) or component having a surface (11) to be coated,
- applying a non-stick and/or non-wetting coating (3) to the surface, the coating (3) having an exposed surface (7),
- performing an activation process on at least a part of the exposed surface (7) of the coating (3) in order to provide an activated surface area (13), wherein the activation process in particular increases the surface tension within the activated surface area (13),
- applying a printing (5) to the activated surface area.

2. The method according to claim 1, **characterized in that** the activation process is performed using plasma technology, in particular by means of a plasma technology gun or pin being moved on or above the part of the exposed surface (7) of the coating (3).

3. The method according to any of claims 1 or 2, **characterized in that** the exposed surface (7) of the coating (3) is covered at least partially before performing the activation process in order to limit the part of the exposed surface (7) on which the activation process is performed, in particular by covering parts of the exposed surface by means of respective cover elements (15) or cover means.

4. The method according to any one of the preceding claims, **characterized in that** the printing (5) is applied by means of ink technology, in particular using serigraphy or tampography.

5. The method according to any one of the preceding claims, **characterized in that** the non-stick and/or non-wetting coating (3) is a sol-gel coating, in particular comprising at least a first and a second layer.

6. The method according to any one of the preceding claims, **characterized in that** the blank sheet or component (1) is a made of a corrosive material, in particular corrosive steel, or made of a non-corrosive material, in particular stainless steel and/or aluminium, or made of glass, in particular a tempered glass, or made of glass ceramics.

7. The method according to any one of the preceding claims, **characterized in that** a protective layer is applied to the surface (11) of the blank sheet or component (1) before applying the coating (3), in particular an enamel layer and/or an aluminium layer and/or a layer comprising aluminium, and the coating (3) is applied to an exposed surface of the protective layer.

8. The method according to any one of the preceding claims, wherein the surface of the blank sheet or component is pretreated before applying the protective layer or the coating and/or wherein the exposed surface of the protective layer is pretreated before applying the coating (3), in each case for providing a surface having a roughness being suitable for applying the protective layer and/or the coating (3), in particular by mechanical treatment, physical treatment or chemical treatment, more preferably by sandblasting and/or laser treatment and/or an enamelling process to form a ground layer (17).

9. Method according to any one of the preceding claims, **characterized in that** the blank sheet is formed into the component after applying of the coating (3).

10. Component (1), in particular obtainable by a method according to any one of the preceding claims, in particular a wall of a household appliance, in particular a wall of a cooking appliance, and/or a fan cover of a cooking appliance and/or a component of or for a cooking hob, in particular a top plate of a cooking hob and/or a burner cap of a gas burner for a gas hob, and/or an accessory for use in a household appliance, in particular a cooking good carrier for a cooking appliance, having a component body and a surface (11), wherein the surface (11) is coated with a non-wetting and/or non-stick coating (3) having an exposed surface (7), wherein at least a part of the exposed surface (7) of the coating (3) provides an activated surface area (13), and wherein a printing (5) is applied to the activated surface area (13).

11. Component (1) according to claim 10, further comprising a protective layer and/or a ground layer (17) arranged between the component body and the coating (3).

12. Component (1) according to any one of the claims 10 to 11, wherein the printing (3) is not touching the component body of the component (1).

13. Component (1) according to any one of the claims 10 to 12, **characterized in that** the component (1) is a made of a corrosive material, in particular corrosive steel, or made of a non-corrosive material, in particular stainless steel and/or aluminium, or made of glass, in particular a tempered glass, or made of glass ceramics.

14. Component (1) according to any one of the claims 10 to 13, **characterized in that** the non-stick and/or non-wetting properties of the coating (3) are not interrupted or disrupted at the area or areas with printing (5).

15. A household appliance, in particular a cooking appliance, more in particular an oven or a cooking hob, comprising a component (1) according to any one of the claims 10 to 14.
